# EUROPÄISCHE PATENTSCHRIFT

(11) **EP 3 676 529 B1**
(45) Veröffentlichungstag und Bekanntmachung des Hinweises auf die Patenterteilung: **28.08.2024**
(21) Anmeldenummer: 18753357.5
(22) Anmeldetag: 06.08.2018
(51) Int. Cl.: F17C 5/02, F17C 9/00

(54) **VERFAHREN ZUM BEFÜLLEN EINES MOBILEN KÄLTEMITTELTANKS MIT EINEM KRYOGENEN KÄLTEMITTEL**
PROCESS FOR FILLING A MOBILE REFRIGERANT TANK WITH A CRYOGENIC REFRIGERANT
PROCÉDÉ DE REMPLISSAGE D'UN RÉSERVOIR DE FRIGORIGÈNE MOBILE COMPRENANT UN FRIGORIGÈNE CRYOGÉNIQUE

(30) Priorität: 31.08.2017 DE 102017008210
(43) Veröffentlichungstag der Anmeldung: 08.07.2020
(73) Patentinhaber: Messer SE & Co. KGaA, 65812 Bad Soden (DE); Messer France S.A.S., 92156 Suresnes Cedex (FR)
(72) Erfinder: FRÈRE, Émilien, 77100 Meaux (FR); GOCKEL, Frank, 42553 Velbert (DE)
(74) Vertreter: Münzel, Joachim R.
(86) Internationale Anmeldenummer: PCT/EP2018/071282
(87) Internationale Veröffentlichungsnummer: WO 2019/042714

(56) Entgegenhaltungen:
- EP-A1- 1 353 112
- DE-C1- 19 704 362
- US-A1- 2013 263 609
- US-A1- 2013 327 421

## Beschreibung

Die Erfindung betrifft ein Verfahren zum Befüllen eines Kältemitteltanks eines Fahrzeugs mit einem kryogenen Kältemittel.

Die Erfindung bezieht sich dabei insbesondere auf eine Vorrichtung bzw. ein Verfahren zum Befüllen von Kältemitteltanks, die zum Kühlen eines Kühlraums bestimmt sind, der sich auf einem Kühlfahrzeug, insbesondere einem Kühllastwagen, befindet. Solche Kühlräume dienen dazu, temperaturempfindliche Waren als Kühlgut bei einer Temperatur von z.B. 4°C bis 10°C, oder als Gefriergut bei Temperaturen unter 0°C zu transportieren. Zur Kühlung derartiger Kühlräume kommen häufig noch konventionelle Kühlaggregate zum Einsatz, die jedoch wegen ihrer hohen Lärmemissionen einerseits und ihrer Dieselemissionen anderseits im laufenden Betrieb mehr und mehr in die Kritik geraten. Als Alternative bietet sich die Kühlung mittels eines kryogenen Kältemittels an. Das kryogene Kältemittel, beispielsweise flüssiger Stickstoff, wird in einem am Fahrzeug montierten thermisch isolierten Kältemitteltank im flüssigen Zustand bevorratet und bei Bedarf über eine Rohrleitung dem Kühlraum zugeführt. Zur Kühlung des Kühlraumes wird das kryogene Kältemittel entweder flüssig oder gasförmig in den Kühlraum eingesprüht (direkte Kühlung) oder über eine Wärmetauscheranordnung mit der Atmosphäre im Kühlraum in indirekten Wärmekontakt gebracht (indirekte Kühlung). Beispiele für derartige Kühlfahrzeuge sowie für Kühlsysteme von Kühlfahrzeugen werden in der WO 2011/141287 A1, EP 1 659 355 A2, GB 2 275 098 A oder der EP 2 384 916 A2 beschrieben.

Darüber hinaus bezieht sich die Erfindung jedoch allgemein auf eine Vorrichtung und ein Verfahren der eingangs genannten Art zur Befüllung von auf Fahrzeugen, insbesondere Straßen- oder Schienenfahrzeugen, montierten Kältemitteltanks (nachfolgend auch "mobile Kältemitteltanks") mit einem kryogenen Kältemittel.

Die Befüllung von mobilen Kältemitteltanks erfolgt üblicherweise an Füllstationen, die mit einem ortsfesten Speichertank strömungsverbunden sind, in dem das Kältemittel im tiefkalten Zustand gelagert wird. Die Füllstation ist mit einer Füllleitung ausgerüstet, an der an einer Kupplung eine Füllleitung des Kältemitteltanks angeschlossen werden kann.

Zur Förderung des Kältemittels zur Füllstation oder beim Befüllen des Kältemitteltanks kommt in der Regel eine Pumpe zum Einsatz. Die Förderung von kryogenen Kältemitteln mittels Pumpe ist allerdings mit Kosten für Betrieb und Wartung der Pumpe verbunden und überdies störanfällig. Zudem wird durch die Pumpe unerwünschte Wärme in das System eingetragen. Um Kavitationseffekte zu vermeiden, müssen Pumpe und Leitung zudem vor dem Füllvorgang vorgekühlt werden, was zu einer erheblichen Zeitverzögerung führt.

Um die Befüllung eines mobilen Kältemitteltanks unter Verzicht auf eine Pumpe zu bewerkstelligen, kann das kryogene Kältemittel in der Füllstation bei einem höheren Druck bereitgestellt werden, als es dem Druck im Kältemitteltank entspricht. Das Kältemittel strömt bei der Betankung unter der Wirkung des höheren Drucks in den Kältemitteltank ein. Dabei besteht jedoch das Problem, dass bei der Entspannung auf den niedrigeren Druck im Kältemitteltank ein Teil des Kältemittels verdampft und abgeführt werden muss. Dies führt zu erheblichen Verlusten an Kältemittel und ist zudem für einen Benutzer mit erheblichen Sicherheitsrisiken verbunden, wenn das verdampfte Kältemittel direkt aus dem Kältemitteltank oder unmittelbar am Fahrzeug in die Umgebungsatmosphäre abgeführt wird.

Bei einer aus der WO 2014/064355 A2 bekannten Einrichtung zum Befüllen eines Kältemitteltanks mit einem kryogenen Medium wird das im Kältemitteltank entstehende Gas aufgefangen und dazu genutzt, eine gleichmäßige, vorgegebene Druckdifferenz zwischen dem Speichertank der Füllstation und dem Kältemitteltank herzustellen. Dazu wird das Gas teilweise in die Füllstation zurückgeführt. Dies verhindert zwar den unkontrollierten Austritt von kaltem Gas in die Umgebung, jedoch ergibt sich die Notwendigkeit, eine dichte Verbindung sowohl zwischen den flüssigen Phasen als auch zwischen den Gasphasen im Kältemitteltank und im Speichertank herzustellen. Dies ist jedoch für einen Benutzer beschwerlich und erhöht nicht zuletzt das Sicherheitsrisiko; zudem wird die Geschwindigkeit des Füllvorgangs reduziert.

Aus der DE 197 04 362 C1 ist eine Einrichtung zum Befüllen von Fahrzeugtanks mit einem kryogenen Treibstoff bekannt, bei dem der Treibstoff im unterkühlten Zustand an den Fahrzeugtank abgegeben wird, was die Sicherheit beim Betankungsvorgang erhöht. Zur Bereitstellung unterkühlten Treibstoffs ist ein erster Speichertank vorgesehen, der innerhalb eines zweiten Speichertanks angeordnet ist, in welchem der Treibstoff bei einem geringeren Druck vorliegt. Diese Anordnung ist allerdings baulich sehr aufwändig.

Aus der US 2013/0263609 A1 ist eine Einrichtung zum Betanken von Fahrzeugtanks mit einem kryogenen Treibstoff, wie LNG, bekannt. Die Einrichtung umfasst einen Speichertank, einen Dispensertank und einen Druckaufbautank. Der Druckaufbautank dient dazu, eine aus dem Speichertank entnommene Menge an kryogenem Treibstoff auf den erforderlichen Fülldruck zu bringen und dem Dispensertank zuzuführen, aus dem dann die Betankung der Fahrzeugtanks erfolgt. Nachteilig ist bei dieser Anordnung allerdings, dass ein nicht unerheblicher und schwer zu erfassender Teil des Treibstoffs bei der Überführung in den Fahrzeugtank verdampft. EP 1 353 112 A1 betrifft ein Verfahren zur Förderung kryogener Flüssigkeit von einem Stationsbehältersystem zu einem Empfangsbehälter.

Ein weiteres Problem besteht bei öffentlichen Füllstationen zur Befüllung von Kältemitteltanks. Hier muss aufgrund gesetzlicher Vorschriften sichergestellt werden, dass eine während der Betankung abgemessene Menge an Kältemittel vollständig in den Tank eines Kunden überführt wird. Dies kann aber nicht gewährleistet werden, wenn das Kältemittel im Kundentank teilweise verdampft und während des Füllvorgangs aus diesem abgezogen wird.

Der Erfindung liegt daher die Aufgabe zu Grunde, ein rasches und sicheres Verfahren zum Befüllen von mobilen Kältemitteltanks anzugeben, das die Erfordernisse an eine öffentliche Füllstation erfüllt.

Gelöst ist diese Aufgabe durch ein Verfahren mit den Merkmalen und Schritten des Patentanspruchs 1.

Eine zur Durchführung des erfindungsgemäßen Verfahrens geeignete Vorrichtung ist mit einem Speichertank zum Bevorraten von verflüssigtem kryogenen Kältemittel ausgerüstet, der mit einer Füllstation in Strömungsverbindung steht, die eine mit einer Kupplung zum Anschließen eines zu befüllenden Kältemitteltanks ausgerüstete Füllleitung aufweist. Stromab zum Speichertank und stromauf zur Füllstation ist ein Konditionierbehälter zum Zwischenspeichern von verflüssigtem kryogenem Kältemittel vorgesehen, der mit einem Druckaufbaubehälter in Strömungsverbindung bringbar ist, in dem kryogenes Kältemittel bei einem höheren Druck als dem Druck im Speichertank vorliegt.

Die Bezeichnungen "stromauf" und "stromab" beziehen sich hier und im Folgenden auf eine Anordnung relativ zur bestimmungsgemäßen Fließrichtung des flüssigen Kältemittels beim Füllvorgang.

Die Vorrichtung umfasst also einen bevorzugt wärmeisolierten Speichertank, in dem das kryogene Kältemittel, insbesondere flüssiger Stickstoff, bei einem vergleichsweise niedrigen Druck p₁ von beispielsweise p₁= 1-2 bar(g) bevorratet wird, einen gleichfalls bevorzugt wärmeisolierten Druckaufbaubehälter, in dem das kryogene Kältemittel bei einem Druck p₂ vorliegt, der höher ist als der Druck p₁ im Speichertank, beispielsweise 5 bis 8 bar(g), sowie einen wärmeisolierten und druckfesten Konditionierbehälter, der wechselweise mit dem Speichertank und dem Druckaufbaubehälter in Strömungsverbindung bringbar ist. Der Konditionierbehälter ist kleiner als der Speichertank und der Druckaufbaubehälter ausgebildet, sodass eine Änderung der Druckverhältnisse im Konditioniertank keinen wesentlichen Einfluss auf die Druckverhältnisse im Speichertank und dem Druckaufbaubehälter hat. Der Konditionierbehälter steht mit der Füllleitung einer Füllstation in Strömungsverbindung, die wiederum mittels einer Kupplung druckfest und flüssigkeitsdicht, jedoch lösbar mit einem Füllanschluss eines zu befüllenden Kältemitteltanks verbindbar ist.

Im Speichertank wird das Kältemittel somit bei vergleichsweise niedrigem Druck und dementsprechend niedriger Temperatur bevorratet und in den Konditionierbehälter bis zur Höhe eines vorgegebenen Pegels eingefüllt. Nach Schließen der Strömungsverbindung zum Speichertank und Öffnen der Strömungsverbindung zum Druckaufbaubehälter erfolgt aufgrund des dort höheren Druckes eine Druckerhöhung im Konditionierbehälter, die dazu führt, dass das dort vorliegende kryogene Kältemittel auf einer Temperatur deutlich unterhalb der Gleichgewichtstemperatur des entsprechenden Drucks vorliegt, d.h. das kryogene Kältemittel liegt im Konditionierbehälter im unterkühlten Zustand vor und kann über die Füllleitung in den Kältemitteltank eingefüllt werden, ohne dass ein wesentlicher Teil des Kältemittels beim Füllvorgang verdampft. Erfindungsgemäß bedarf es keiner Rückleitung, mittels der Gas aus dem Kopfraum des Kältemitteltanks zur Füllstation zurückgeführt werden müsste.

Der Speichertank und der Konditionierbehälter sind bevorzugt über zwei Leitungen miteinander verbunden: Eine erste Leitung, mittels der dem Konditionierbehälter flüssiges Kältemittel aus dem Speichertank zugeführt wird und eine zweite Leitung, mittels der gasförmiges Kältemittel aus dem Konditionierbehälter in den Kopfraum des Speichertanks zurückgeführt und somit ein Druckausgleich zwischen Speichertank und Konditioniertank während der Befüllung des Konditioniertanks erfolgen kann. Beide Leitungen sind mit Sperrarmaturen ausgerüstet, die vor der Herstellung der Strömungsverbindung des Konditionierbehälters mit dem Druckaufbaubehälter geschlossen werden.

Die Menge an insgesamt dem Kältemitteltank zugeführtem Kältemittel wird bevorzugt an einer in der Füllleitung, stromab zum Konditionierbehälter, angeordneten Messeinrichtung erfasst. Da während des Füllvorgangs der Kältemitteltank gasdicht mit der Füllstation verbunden ist und weder Gas in die Umgebung abgeblasen noch in die Füllstation oder den Speichertank rückgeführt wird, entspricht die an der Messeinrichtung erfasste Menge sehr genau der tatsächlich in den Kältemitteltank eingebrachten Menge an Kältemittel. Dadurch ist die erfindungsgemäße Vorrichtung insbesondere auch für die Ausstattung öffentlicher Tankstellen für kryogene Kältemittel geeignet.

Eine besonders vorteilhafte Ausgestaltung der Erfindung sieht vor, dass der Druckaufbaubehälter zum Speichern von verflüssigtem kryogenem Kältemittel ausgelegt und mit einem Verdampfer zum Verdampfen von kryogenem Kältemittel ausgerüstet ist. Im Druckaufbaubehälter liegt das Kältemittel also in verflüssigter Form vor und wird zur Herstellung des auf den Konditionierbehälter wirkenden Drucks ganz oder teilweise verdampft. Die Verdampfung erfolgt dabei bevorzugt mittels eines Luftverdampfers, bei dem das flüssige kryogene Kältemittel thermischen Kontakt mit der wärmeren Umgebungsluft gebracht wird.

Bevorzugt ist die Füllleitung stromauf zur Kupplung mit einer verschließbaren Abgasleitung zur Entlüftung des Kältemitteltanks strömungsverbunden. Die Abgasleitung ist innerhalb der Füllstation angeordnet und ermöglicht das Abführen von gasförmigem Kältemittel aus dem Kältemitteltank. In diesem Falle dienen die Abschnitte der Füllleitung zwischen Kältemitteltank und Kupplung sowie zwischen Kupplung und dem Abzweig der Abgasleitung somit sowohl zum Zuführen von flüssigem kryogenem Medium an den Kältemitteltank als auch zum Abführen von gasförmigem Kältemittel aus dem Kältemitteltank vor Beginn von dessen Befüllung mit flüssigem Kältemittel. Es ist somit nicht erforderlich, eine eigene Leitung zum Abführen der Gasphase aus dem Kältemitteltank vorzusehen.

Zweckmäßigerweise ist eine Mehrzahl von Konditionierbehältern vorgesehen, die mittels geeigneter Sperrarmaturen, die etwa mittels einer Steuereinheit ferngesteuert werden können, mit dem Speichertank und/oder dem Druckaufbaubehälter in Strömungsverbindung bringbar und jeweils an eine Füllstation angeschlossen sind. Auf diese Weise können mit einem Speicherbehälter und einem Druckaufbaubehälter mehrere Betankungsvorgänge gleichzeitig vorgenommen werden.

Bei dem kryogenen Kältemittel handelt es sich bevorzugt um verflüssigten Stickstoff, verflüssigten Wasserstoff oder ein verflüssigtes Kohlenwasserstoffgas, wie beispielsweise LNG oder LPG.

Ein zur Befüllung nach dem erfindungsgemäßen Verfahren geeigneter Kältemitteltank weist eine mit der Kupplung der Füllstation verbindbaren, in den Kältemitteltank einmündende Füllleitung auf, wobei die Füllleitung in einem oberen Bereich des Kältemitteltanks an einer Düsenanordnung ausmündet. Während des Füllvorgangs wird bevorzugt kontinuierlich verflüssigtes, unterkühltes Kältemittel in einem im oberen Bereich des Kältemitteltanks vorliegenden Gasphase eingesprüht, das bei den im Kältemitteltank vorliegenden Druckverhältnissen im unterkühlten Zustand vorliegt. Dadurch wird die im Kältemitteltank vorliegende Gasphase gekühlt und der Druck im Kältemitteltank reduziert. Je nach Temperaturverhältnissen kommt es sogar zum teilweisen Auskondensieren des Gases. Der Kältemitteltank benötigt dabei keine von der Füllleitung getrennte Leitung zum Abführen von gasförmigem Kältemittel.

Das erfindungsgemäße Betankungsverfahren zum Befüllen eines Kältemitteltanks eines Kühlfahrzeugs mit einem kryogenen Kältemittel ist durch die Schritte des unabhängigen Anspruchs 1 gekennzeichnet.

Zur Befüllung des Konditionierbehälters ist entweder der Ausgangsdruck im Speichertank höher als der im Konditioniertank, sodass der Konditioniertank unter der Wirkung des im Speichertank vorliegenden Überdrucks bis zur Höhe eines vorgegebenen Pegels befüllt werden kann. In diesem Fall wird beim Befüllen des Konditioniertanks das Kältemittel entspannt und liegt dort bei einer tieferen Temperatur als im Speichertank vor. Oder der Speichertank und der Konditioniertank sind sowohl an den in ihnen vorliegenden flüssigen Phasen als auch den Gasphasen verbunden und weisen im wesentlichen gleichen Druck und gleiche Temperatur auf. Nach der Unterbrechung der Strömungsverbindung zum Speicherbehälter wird der Druck im Konditionierbehälter unter zumindest weitgehend isothermen Bedingungen, d.h. ohne, dass sich die Temperatur des eingefüllten kryogenen Kältemittels im Konditionierbehälter wesentlich erhöht, auf einen Wert p₂ mit p₂>p₁ gebracht. Das im Konditioniertank vorliegende verflüssigte Kältemittel wird also unterkühlt, und somit vermieden, dass ein Teil des Kältemittels bereits bei der Zuführung an den Kältemitteltank verdampft. Zugleich wird dadurch das Kältemittel im Konditioniertank auf einen Druck gebracht, der eine Befüllung eines Kältemitteltanks ohne Zuhilfenahme einer Pumpe ermöglicht. Dazu muss die Atmosphäre im zu füllenden Kältemitteltank vor dem Beginn des Betankungsvorgangs auf einen entsprechend niedrigeren Druckwert (p<p₂) entspannt werden, falls dort ein höherer Druck vorliegt. Nach dem Abschluss der Befüllung wird die Strömungsverbindung vom Kältemitteltank zum Konditionierbehälter unterbrochen und die Kupplungsteile werden voneinander gelöst. Anschließend kann das Kühlfahrzeug von der Füllstation entfernt werden. Zugleich wird auch die Strömungsverbindung zwischen Druckaufbaubehälter und Konditionierbehälter geschlossen und der Konditionierbehälter druckentlastet, beispielsweise über eine Gasrückleitung, die einen obere Bereich des Konditionierbehälters mit einem oberen Bereich des Speichertanks verbindet. Anschließend steht der Konditionierbehälter für eine Neubefüllung zur Verfügung.

Die oben erwähnte Erhöhung des Drucks im Konditionierbehälter erfolgt bevorzugt dadurch, dass nach Unterbrechung der Strömungsverbindung zum Speicherbehälter eine Strömungsverbindung zu einem Druckaufbaubehälter hergestellt wird, in dem ein höherer Druck als im Speichertank vorliegt. Der Druckaufbaubehälter ist dazu bevorzugt mit dem gleichen kryogenen Kältemittel wie der Speichertank gefüllt, das im Druckaufbaubehälter im flüssigen Zustand bevorratet und vor der Herstellung der Strömungsverbindung mit dem Konditioniertank zumindest teilweise verdampft wird. Zweckmäßigerweise wird die Atmosphäre im Kältemitteltank vor Beginn der Betankung auf einen Druck zwischen 0 bar(g) (d.h. Umgebungsdruck) bis 2bar(g), entspannt. Bevorzugt erfolgt dies dadurch, dass ein Teil der im Kältemitteltank vorliegenden Gasphase über die gleiche Füllleitung, mittels der das Kältemittel dem Kältemitteltank zugeführt wird (Schritt d.), die dadurch zugleich vorgekühlt wird.

Um die im Kältemitteltank vorliegende Gasphase zu kühlen und dementsprechend den Druck im Kältemitteltank zu senken, wird vorzugsweise das flüssige kryogene Kältemittel über eine Düsenanordnung in eine im Kältemitteltank vorliegende Gasphase eingesprüht.

Bevorzugt beträgt vor bzw. während der Befüllung der Druck p₁ im Speichertank zwischen 1bar(g) und 2 bar(g) und der Druck p₂ im Konditionierbehälter nach der Erhöhung des Drucks zwischen 5 bar(g) und 10 bar(g). Im Falle, dass die Erhöhung des Drucks im Konditionierbehälter durch die Herstellung einer Strömungsverbindung mit einem Druckaufbaubehälter erfolgt, liegt das kryogene Kältemittel in diesem bevorzugt bei einem Druck von ebenfalls zwischen 5 bar(g) und 10 bar(g) vor.

Das erfindungsgemäße Verfahren eignet sich insbesondere zur Betankung von Kältemitteltanks mit flüssigem Stickstoff, jedoch auch zur Betankung von Kältemitteltanks mit flüssigem Wasserstoff oder einem verflüssigten Kohlenwasserstoffgases, wie beispielsweise LNG oder LPG. Bevorzugt handelt es sich beim Kältemitteltank um einen Tank, der an oder auf einem Landfahrzeug, beispielsweise einem Lastkraftwagen, montiert ist.

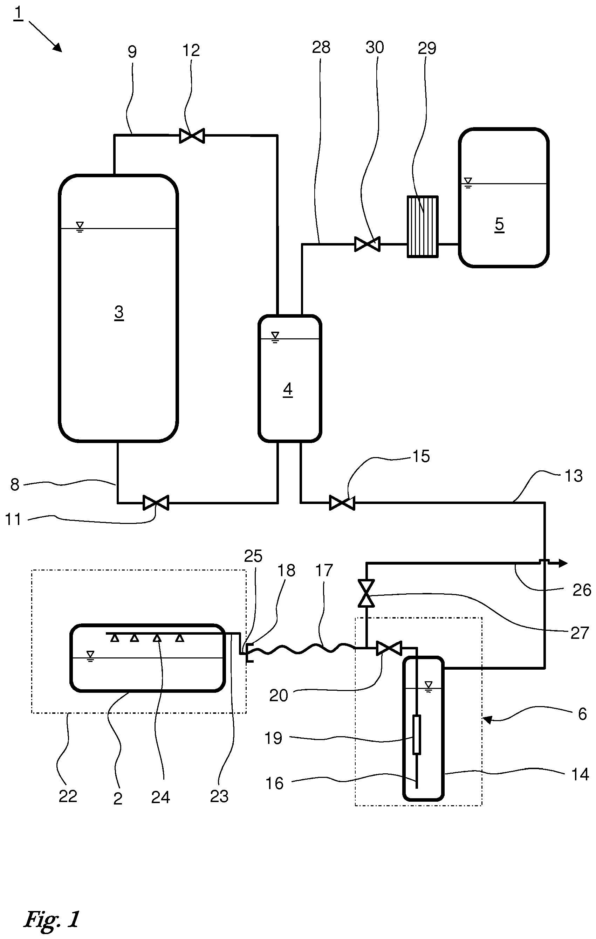

Anhand der Zeichnung soll ein Ausführungsbeispiel der Erfindung näher erläutert werden. Die einzige Zeichnung (Fig. 1) zeigt schematisch den Aufbau einer erfindungsgemäßen Vorrichtung.

Die Vorrichtung 1 zum Befüllen eines mobilen Kältemitteltanks 2 mit einem verflüssigten kryogenen Kältemittel umfasst einen Speichertank 3, einen Konditionierbehälter 4, einen Druckaufbaubehälter 5 und eine Füllstation 6. Beispielsweise hat der Speichertank 3 ein Fassungsvermögen von 20000-50000I, der Druckaufbaubehälter 5 ein Fassungsvermögen von 5000-10000l und der Konditionierbehälter ein Fassungsvermögen von 1000-2000l, also weniger als ein Zehntel des Fassungsvermögens des Speichertanks. Speichertank 3, Konditioniertank 4 und Druckaufbaubehälter 5 sind, ebenso wie die sie verbindenden und von ihnen abgehenden Leitungen, thermisch gut isoliert ausgebildet.

Vom Boden des Speichertanks 3 führt eine Flüssigzuleitung 8 zum Konditionierbehälter 4. Eine Gasrückleitung 9 verbindet den Speichertank 3 mit dem Konditionierbehälter 4 in deren jeweils oberem Bereich. Flüssigzuleitung 8 und Gasrückleitung 9 können durch Betätigen von Ventilen 11, 12 gesperrt und geöffnet werden.

Vom Boden des Konditionierbehälters 4 führt eine Flüssigzuleitung 13 zu einem als Phasentrenner fungierenden Zwischenbehälter 14 in der Füllstation 6, wobei auch hier ein Ventil 15 das Sperren oder Öffnen der Flüssigzuleitung 13 ermöglicht. Von einem unteren Bereich des Zwischenbehälters 14 führt eine Füllleitung 16, die einen flexiblen Leitungsabschnitt 17 aufweist, zu einem Kupplungsanschluss 18. Zur Erfassung des Durchflusses durch die Flüssigzuleitung 13 ist eine hierzu geeignete Messeinrichtung 19, beispielsweise eine Messblende, vorgesehen. Die Füllleitung 16 kann mittels eines Ventils 20 gesperrt oder geöffnet werden. Die Füllstation 6 ist nach Art einer Zapfsäule aufgebaut und ermöglicht in der unten näher beschriebenen Weise die Betankung eines Kältemitteltanks 2, der sich auf einem - hier durch eine strichpunktierte Linie lediglich angedeutetem - Kühlfahrzeug 22 befindet. Der Kältemitteltank 2 dient zur Kühlung eines hier nicht gezeigten Kühlraums auf dem Kühlfahrzeug 22, beispielsweise eines Kühlraums zum Transportieren von gekühlten und/oder gefrorenen Lebensmitteln.

Auf dem Kühlfahrzeug 22 führt eine Füllleitung 23 von einem mit dem Kupplungsanschluss 18 fest, jedoch lösbar verbindbaren Kupplungsstück 25 zum Kältemitteltank 2, in dem sie in einem oberen Bereich an einer aus mehreren Sprühdüsen bestehenden Düsenanordnung 24 ausmündet.

Von der Füllleitung 16 zweigt, strömungstechnisch zwischen Kupplungsanschluss 18 und Messeinrichtung 19, eine Abgasleitung 26 ab, die mittels eines Ventils 27 gesperrt oder geöffnet werden kann. Die Abgasleitung 26 mündet in hier nicht gezeigter Weise in einem Auffangbehälter, einer Rückleitung oder in einen Gasaustritt, an dem das Gas in die Umgebungsatmosphäre abgegeben wird.

Aus einem oberen Bereich des Konditionierbehälters 4 führt eine Druckgasleitung 28 zum Druckaufbaubehälter 5. In der Druckgasleitung 28 ist ein Verdampfer 29, insbesondere ein Luftverdampfer, angeordnet. Dir Druckgasleitung 28 kann mittels eines Ventils 30 gesperrt oder geöffnet werden, das wie alle anderen zuvor genannten Ventile auch, manuell oder mittels ferngesteuertem Motor betätigt werden kann.

Im Betrieb der Vorrichtung 1 wird ein flüssiges kryogenes Kältemittel, beispielsweise flüssiger Stickstoff, im Speichertank 3 bei einem Druck von beispielsweise 1 bar(g) bis 2 bar(g) gelagert. Durch Öffnen des Ventils 11 bei Offenhaltung des Ventils 12 wird der Konditionierbehälter 4 bis zu Höhe eines vorgegebenen Pegels befüllt. Die Ventile 15 und 30 sind währenddessen geschlossen.

Vor der Befüllung des Kältemitteltanks 2 wird der flexible Leitungsabschnitt 17 der Füllleitung 16 am Kupplungsanschluss 18 mit dem Kupplungsstück 25 der Füllleitung 23 verbunden. Das Ventil 20 ist geschlossen. Anschließend wird das Ventil 27 geöffnet und Gas aus einer im Kältemitteltank 2 vorliegenden Gasphase wird über die Abgasleitung 26 abgeführt, bis im Kältemitteltank 2 ein vorgegebener Druckwert von beispielsweise 0 bar(g) bis 2 bar(g) erreicht ist. Anschließend wird das Ventil 27 geschlossen. Durch den Strom des kalten Gases durch die Füllleitung 23 und den Leitungsabschnitt 17 werden diese für die nun folgende Befüllung des Kältemitteltanks 2 vorgekühlt.

Ungefähr gleichzeitig mit dem Ablassen des Gases aus dem Kältemitteltank 2 werden die Ventile 11, 12 geschlossen und das Ventil 30 geöffnet. Aus dem Druckaufbaubehälter 5, in dem das kryogene Kältemittel bei einem Druck von beispielsweise zwischen 5 bar(g) und 8 bar(g) vorliegt, strömt flüssiges Kältemittel aus, das im Verdampfer 29 verdampft und als Gas in den Kopfraum des Konditionierbehälters 4 einströmt. Die damit verbundene Druckerhöhung im Konditionierbehälter 4 führt dazu, dass das dort vorliegende flüssige Kältemittel nunmehr unterkühlt vorliegt, also bei einer wesentlich tieferen Temperatur als es der Gleichgewichtstemperatur bei einem Druck von 5 bar(g) bis 8 bar(g) entspricht. Anschließend wird das Ventil 15 geöffnet, wodurch flüssiges Kältemittel aus dem Konditionierbehälter 4 über die Flüssigzuleitung 13 in den Zwischenbehälter 14 einströmt und dort eine flüssige Phase ausbildet, in die die Füllleitung 16 mit ihrem vom Kupplungsanschluss 18 entgegen gesetztem Ende eintaucht.

Anschließend wird das Ventil 20 geöffnet. Das flüssige Kältemittel strömt im noch unterkühlten Zustand über die Füllleitung 16 und die Füllleitung 23 zur Düsenanordnung 24, und wird in eine im Kältemitteltank 2 vorliegende Gasphase eingesprüht. Durch den Kontakt der kalten Flüssigkeit mit dem vergleichsweise warmem Gas im Kältemitteltank 2 wird die dort vorliegende Gasphase abgekühlt und teilweise zu flüssigem Kältemittel kondensiert, wodurch der Druck im Kältemitteltank reduziert wird.

Die vollständige Befüllung des Kältemitteltanks 2 wird durch einen Druckanstieg in der Füllleitung 23 festgestellt, der mittels einer hier nicht gezeigten Messeinrichtung gemessen wird. Nach Beendigung des Füllvorgangs werden die Ventile 20, 30 geschlossen. Kupplungsstück 25 und Kupplungsanschluss 18 können nun voneinander getrennt werden. Durch Öffnen des Ventils 12 erfolgt ein Druckausgleich zwischen dem Speichertank 3 und dem Konditionierbehälter 4, der nun erneut mit flüssigem Kältemittel aus dem Speichertank 3 bei dem dort vorliegenden, niedrigen Druck befüllt werden kann.

Der Betankungsvorgang nach dem erfindungsgemäßen Verfahren kommt vollständig ohne zwischenzeitliche Entlüftung des zu befüllenden Kältemitteltanks 2 aus.

Dadurch wird nicht nur der Kältemittelverbrauch minimiert und die Anforderungen an eine öffentliche Füllstation erfüllt, sondern der Betankungsvorgang kann auch sehr rasch erfolgen. Beispielsweise kann ein 660l fassender Tank innerhalb von 6 min bis 8 min mit flüssigem Stickstoff gefüllt werden. Zudem verzichtet die erfindungsgemäße Anordnung auf eine separate Kupplung zum Anschließen einer Gasrückleitung aus dem Kältemitteltank 2, wodurch eine hohe Bedienungsfreundlichkeit und Sicherheit gewährleistet wird.

### Bezugszeichenliste

- 1.: Vorrichtung
- 2.: Kältemitteltank
- 3.: Speichertank
- 4.: Konditionierbehälter
- 5.: Druckaufbaubehälter
- 6.: Füllstation
- 7.: -
- 8.: Flüssigzuleitung
- 9.: Gasrückleitung
- 10.: -
- 11.: Ventil
- 12.: Ventil
- 13.: Flüssigzuleitung
- 14.: Zwischenbehälter
- 15.: Ventil
- 16.: Füllleitung
- 17.: Flexibler Leitungsabschnitt
- 18.: Kupplungsanschluss
- 19.: Messeinrichtung
- 20.: Ventil
- 21.: -
- 22.: Kühlfahrzeug
- 23.: Füllleitung
- 24.: Düsenanordnung
- 25.: Kupplungsstück
- 26.: Abgasleitung
- 27.: Ventil
- 28.: Druckgasleitung
- 29.: Verdampfer
- 30.: Ventil

## Patentansprüche

1. Verfahren zum Befüllen eines Kältemitteltanks (2) eines Fahrzeugs (22) mit einem kryogenen Kältemittel, bei dem
a. ein bei einem Druck p₁ in einem Speichertank (3) bevorratetes, verflüssigtes kryogenes Kältemittel einem Konditionierbehälter (4) zugeführt wird und dort eine flüssige Phase ausbildet,
b. die Strömungsverbindung zwischen Speichertank (3) und Konditionierbehälter (4) unterbrochen und der Druck im Konditionierbehälter (4) isotherm auf einen Wert p₂ gebracht wird, der größer ist als der Druck p₁ im Speichertank (3) ist, wodurch das kryogene Kältemittel im Konditionierbehälter (4) unterkühlt wird,
c. der zu befüllende Kältemitteltank (2) auf einen Druck, der geringer als der Druck im Konditionierbehälter ist, entspannt wird,
d. eine Strömungsverbindung zwischen der im Konditionierbehälter (4) vorliegenden flüssiges Phase des kryogenen Kältemittels und einem zu befüllenden Kältemitteltank (2) hergestellt und der Kältemitteltank (2) unter dem Überdruck des im Konditioniertank vorliegenden kryogenen Kältemittels befüllt wird.

2. Verfahren nach Anspruch 1, **dadurch gekennzeichnet, dass** zur isothermen Erhöhung des Drucks im Konditionierbehälter im Schritt b. eine Strömungsverbindung zwischen Konditionierbehälter (4) und einem Druckaufbaubehälter (5) hergestellt wird, in dem gasförmiges kryogenes Kältemittel bei einem Druck p₂ vorliegt, der größer ist als der Druck p₁ im Speichertank (3) ist.

3. Verfahren nach Anspruch 1 oder 2, **dadurch gekennzeichnet, dass** vor Herstellung der Strömungsverbindung der im Konditionierbehälter (4) vorliegenden flüssigen Phase mit dem zu befüllenden Kältemitteltank (2) dieser auf einen Druck von 0 bar(g) bis 2 bar(g) gebracht wird.

4. Verfahren nach einem der vorhergehenden Ansprüche, **dadurch gekennzeichnet, dass** nach Herstellen der Strömungsverbindung zwischen Konditionierbehälter (4) und dem Kältemitteltank (2) das kryogene Kältemittel in eine im Kältemitteltank (2) vorliegende Gasphase eingesprüht wird.

5. Verfahren nach einem der vorhergehenden Ansprüche, **dadurch gekennzeichnet, dass** der Druck p₁ im Speichertank (3) zwischen 1bar(g) und 2 bar(g) beträgt und der Druck p₂ im Konditionierbehälter (4) und/oder im Druckaufbaubehälter (5) zwischen 5 bar(g) und 10 bar(g) beträgt.

## Claims

1. Method for filling a refrigerant tank (2) of a vehicle (22) with a cryogenic refrigerant, in which
a. a liquefied cryogenic refrigerant stored at a pressure p₁ in a storage tank (3) is supplied to a conditioning vessel (4) and, there, forms a liquid phase,
b. the flow connection between the storage tank (3) and the conditioning vessel (4) is interrupted and the pressure in the conditioning vessel (4) is brought isothermally to a value p₂ which is higher than the pressure p₁ in the storage tank (3), whereby the cryogenic refrigerant in the conditioning vessel (4) is supercooled,
c. the pressure in the refrigerant tank (2) to be filled is reduced to a pressure which is lower than the pressure in the conditioning vessel,
d. a flow connection between the liquid phase of the cryogenic refrigerant that is present in the conditioning vessel (4) and a refrigerant tank (2) to be filled is established and the refrigerant tank (2) is filled under the positive pressure of the cryogenic refrigerant present in the conditioning tank.

2. Method according to Claim 1, **characterized in that**, for isothermally increasing the pressure in the conditioning vessel in step b., a flow connection between the conditioning vessel (4) and a pressure build-up vessel (5), in which gaseous cryogenic refrigerant is present at a pressure p₂ which is higher than the pressure p₁ in the storage tank (3), is established.

3. Method according to Claim 1 or 2, **characterized in that**, before the flow connection of the liquid phase present in the conditioning vessel (4) to the refrigerant tank (2) to be filled is established, the latter is brought to a pressure of 0 bar(g) to 2 bar(g).

4. Method according to one of the preceding claims, **characterized in that**, after the flow connection between the conditioning vessel (4) and the refrigerant tank (2) has been established, the cryogenic refrigerant is sprayed into a gas phase which is present in the refrigerant tank (2).

5. Method according to one of the preceding claims, **characterized in that** than the pressure p₁ in the storage tank (3) is between 1 bar(g) and 2 bar(g), and the pressure p₂ in the conditioning vessel (4) and/or in the pressure build-up vessel (5) is between 5 bar(g) and 10 bar(g).

## Revendications

1. Procédé de remplissage d'un réservoir d'agent de refroidissement (2) d'un véhicule (22) avec un agent de refroidissement cryogénique, procédé dans lequel
a. un agent de refroidissement cryogénique liquéfié stocké dans un réservoir de stockage (3) à une pression p₁ est amené à un récipient de conditionnement (4) où il forme une phase liquide,
b. la liaison d'écoulement entre le réservoir de stockage (3) et le réservoir de conditionnement (4) est interrompue et la pression dans le réservoir de conditionnement (4) est amenée de manière isotherme à une valeur p₂ supérieure à la pression p₁ dans le réservoir de stockage (3), ce qui sur-refroidit l'agent de refroidissement cryogénique dans le récipient de conditionnement (4),
c. le réservoir d'agent de refroidissement (2) à remplir est détendu jusqu'à une pression inférieure à la pression régnant dans le récipient de conditionnement,
d. une liaison d'écoulement est établie entre la phase liquide de l'agent de refroidissement cryogénique présent dans le récipient de conditionnement (4) et un réservoir d'agent de refroidissement (2) à remplir et le réservoir d'agent de refroidissement (2) est rempli à la surpression de l'agent de refroidissement cryogénique présent dans le réservoir de conditionnement.

2. Procédé selon la revendication 1, **caractérisé en ce que**, pour augmenter la pression dans le récipient de conditionnement de manière isotherme à l'étape b, une liaison d'écoulement est établie entre le récipient de conditionnement (4) et un récipient de mise en pression (5) dans lequel un agent de refroidissement cryogénique gazeux est présent à une pression p₂ supérieure à la pression p₁ dans le réservoir de stockage (3).

3. Procédé selon la revendication 1 ou 2, **caractérisé en ce que**, avant d'établir la liaison d'écoulement de la phase liquide présente dans le récipient de conditionnement (4) avec le réservoir d'agent de refroidissement (2) à remplir, celui-ci est porté à une pression de 0 bar (g) jusqu'à 2 bar (g).

4. Procédé selon l'une des revendications précédentes, **caractérisé en ce que**, après établissement de la liaison d'écoulement entre le récipient de conditionnement (4) et le réservoir d'agent de refroidissement (2), l'agent de refroidissement cryogénique est pulvérisé dans une phase gazeuse présente dans le réservoir d'agent de refroidissement (2) .

5. Procédé selon l'une des revendications précédentes, **caractérisé en ce que** la pression p₁ dans le réservoir de stockage (3) est comprise entre 1 bar (g) et 2 bar (g) et la pression p₂ dans le récipient de conditionnement (4) et/ou dans le récipient de mise en pression (5) est comprise entre 5 bar(g) et 10 bar(g).
